# EUROPEAN PATENT APPLICATION

(11) **EP 1 849 847 A1**
(43) Date of publication of application: **31.10.2007**
(21) Application number: 06711803.4
(22) Date of filing: 17.01.2006
(51) Int. Cl.: C09K 11/08, H01J 11/02

(54) **METHOD FOR MANUFACTURING FLUORESCENT MATERIAL, FLUORESCENT MATERIAL AND PLASMA DISPLAY PANEL**

(30) Priority: 26.01.2005 JP 2005018464
(71) Applicant: Konica Minolta Medical & Graphic, Inc., Tokyo 163-0512 (JP)
(72) Inventor: GOAN, Kazuyoshi, machi, Hino-shi, Tokyo, 1918511 (JP)
(74) Representative: Gille Hrabal Struck Neidlein Prop Roos
(86) International application number: PCT/JP2006/300523
(87) International publication number: WO 2006/080207

(57) **Abstract**

A method of manufacturing a phosphor comprising the steps of: forming a precursor of the phosphor in a liquid phase; and firing the precursor to form the phosphor, wherein the step of firing the precursor comprises a plurality of firing steps of the precursor in an inert gas atmosphere.

## Description

### TECHNICAL FIELD

The present invention relates to a production method of phosphors, a phosphor, and a plasma display panel, and in particular to a phosphor production method provided with a plurality of firing steps so that in each step, a phosphor precursor is fired under the specified firing conditions, a phosphor, and a plasma display panel.

### BACKGROUND OF THE INVENTION

In recent years, developed as display devices, which utilize a new image display system which substitutes for the CRT (cathode ray tube), have been a liquid crystal display (LCD) utilizing a liquid crystal panel, an EL display utilizing electro luminescence (EL) phenomena, and a plasma display utilizing a plasma display panel (PDP).

Of these, the plasma display enables reduced thickness and weight, and realization of a large image area, as well as viewing of bright and clear images from a wide viewing range from up to down as well as from left to right, compared to the liquid crystal panel, since the viewing angle extends to at least 160° horizontally and vertically. Further, since the plasmas display is an image display system based on fixed pixels via dot matrix, it is possible to minimize color shifting and image distortion, and to put high quality images on the screen even on a large image screen.

In the PDP employed in the above display, many discharge cells are arranged, each of which is composed of two glass substrates fitted with electrodes and a partition between the substrates. In the interior of each of these discharge cells, formed is a phosphor coated phosphor layer. The PDP constituted as above generates vacuum ultraviolet rays (hereinafter referred to as VUV) due to discharge gas sealed in the interior of the discharge cell by allowing the discharge cell to selectively discharge while voltage is applied between the electrodes. The resulting VUV excites the phosphor to result in emission of visible light.

Common production methods of the above phosphors include a solid phase method in which compounds incorporating elements constituting a phosphor host and compounds incorporating activator elements are mixed in a specified amount and ratio, and the resulting mixture is fired to undergo reaction among the solids, and alternately, a liquid phase method in which a phosphor raw material solution incorporating elements constituting a phosphor host and a phosphor raw material solution incorporating activator elements are mixed, and after the resulting phosphor precursor precipitates are subjected to solid-liquid separation, firing is carried out.

When phosphors are produced via the liquid phase method, initially, precipitates which are phosphor precursors are formed and phosphors are prepared by firing the resulting precursors. However, problems occur in which many impurities are mixed in the medium which precipitate precursors. Since complete combustion of these impurities along with residual impurities is difficult, problems occur such as discoloration of phosphors, uneven firing, or damage to the phosphor due to sputtering.

Consequently, developed as a phosphor production method capable of realizing production stability and enhanced emission intensity has been an inorganic phosphor production method in which a first firing step is carried out under an oxygen incorporating atmosphere and a second firing step is carried out under a weak reductive atmosphere, whereby discoloration and uneven firing of phosphors during the production step are minimal, and inorganic phosphors (refer, for example, to Patent Document 1).

Further developed as a production method of phosphors capable of realizing enhanced emission intensity is a production method capable of easily producing SIALON based oxynitride phosphors which easily enable production of targeted α-SIALON based oxynitride phosphors (refer, for example, to Patent Document 2).

In the case of the above inorganic phosphor production methods and the resulting inorganic phosphors, it is possible to minimize discoloration and uneven firing of phosphors by changing various firing conditions. However, problems still occur in which no sufficient countermeasures have been realized to minimize damages to phosphors due to sputtering.

Further, at present no technologies are disclosed which minimize damages of phosphors due to sputtering while maintaining sufficient emission intensity.
(Patent Document 1) Japanese Patent Application Publication Open to Public Inspection (hereinafter referred to as JP-A) No. 2003-183643
(Patent Document 2) JP-A No. 2004-238506

### SUMMARY OF THE INVENTION

An object of the present invention is to provide a method of manufacturing a phosphor capable of efficiently minimizing damage to phosphors due to sputtering while maintaining high emission intensity, as well as a phosphor and a plasma display panel.

One of the embodiments to achieve the above object of the present invention is a method of manufacturing a phosphor comprising the steps of: forming a precursor of the phosphor in a liquid phase; and firing the precursor to form the phosphor, wherein the step of firing the precursor comprises a plurality of firing steps of the precursor in an inert gas atmosphere.

### BRIEF DESCRIPTION OF THE DRAWINGS

Fig. 1 is a schematic view showing a Y-shaped reaction apparatus.
Fig. 2 is a perspective view showing the structure of a plasma display panel.
Fig. 3 is a perspective view showing the structure of another discharge cell.
Fig. 4 is a perspective view showing the structure of still another discharge cell.

### DESCRIPTION OF THE PREFERRED EMBODIMENTS

The above object of the present invention was achieved employing the following embodiments.
(1) A method of manufacturing a phosphor comprising the steps of:
   forming a precursor of the phosphor in a liquid phase; and
   firing the precursor to form the phosphor, wherein
   the step of firing the precursor comprises a plurality of firing steps of the precursor in an inert gas atmosphere.
(2) The method of manufacturing a phosphor of Item (1), wherein a firing temperature in each of the plurality of firing steps of the precursor is 1000 to 1400 °C.
(3) The method of manufacturing a phosphor of Item (1) or Item (2), wherein a firing duration of a first firing step is 3 to 10 hours.
(4) The method of manufacturing a phosphor of any one of Items (1) to (3), wherein a firing duration of each of a second firing step or the following steps is 2 to 5 hours.
(5) A phosphor manufactured by the method of any one of Items (1) to (4).
(6) A plasma display comprising a discharge cell manufactured by using the phosphor of Item (5).

According to the invention described in Item (1) above, the firing step is constituted of a plurality of firing steps which fire precursors under an atmosphere of inert gases. Consequently, a plurality of firing treatments is carried out in the presence of inert gases, enabling efficient burning-up of impurities or by-product salts. By doing so, it is possible to efficiently reduce damage of the phosphors themselves due to sputtering or exposure to VUV while maintaining high emission intensity of phosphors and plasma display panels by minimizing discoloration of phosphors or uneven firing due to the firing treatment.

According to the invention described in Item (2) above, firing temperature during a plurality of firing steps is 1,000 - 1,400 °C, whereby it is possible to more efficiently burn up impurities or by-product salts by regulating the firing temperature in each firing step.

According to the invention described in (3) above, the firing duration during the first firing step is within 3 - 10 hours, whereby it is possible to efficiently burn up impurities or by-product salts by regulating the firing duration during the first firing step.

According to the invention described in (4) above, the firing duration of each firing step of the second firing step and the following step is within 2 - 5 hours, whereby it becomes possible to efficiently burn up impurities or by-product salts by regulating the firing duration during each of the second firing step and the following ones.

Based on the invention described in (5) above, since production is carried out via the production method described in any one of (1) - (4) above, impurities or by-product salts are effectively removed during the production step to enable enhancement of stoichiometric purity, whereby it is possible to minimize damage of phosphors due to sputtering while maintaining desired emission intensity.

According to the invention described in (6) above, the discharge cell, produced employing the phosphors described in (5) above, is incorporated to enable enhancement of the emission intensity of the discharge cell, whereby it is possible to realize enhancement of emission intensity of the PDP.

The preferred embodiments to practice the present invention will now be described with reference to drawings. The embodiments described below are limited with preferred techniques to realize the present invention, however, the scope of the present invention is not limited to the following embodiments nor to the examples illustrated in the drawings.

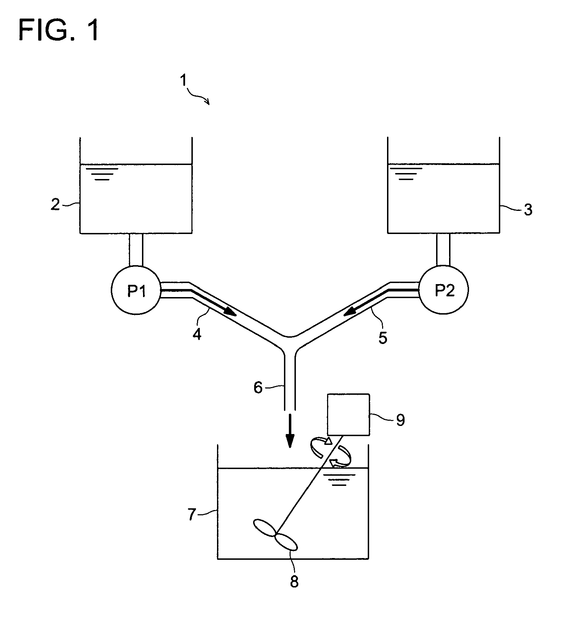

Referring to Figs. 1 - 4, described is each of the phosphor production methods, the phosphors, and the plasma display panels according to the present invention.

Initially described will be phosphors.

The phosphors in the present embodiments are vacuum ultraviolet ray exciting phosphors (hereinafter referred to as phosphors), which are prepared in such a manner that after completing a precursor forming step, firing is carried out under specified conditions in a plurality of firing steps, conditioned in an inert gas atmosphere. Due to the above preparation, even though excessive impurities, which undergo no reaction after a desalting step, and by-product salts, which are formed via reaction, remain, such impurities or by-product salts are uniformly and assuredly burned up to result in removal of the above impurities or by-product salts so that the phosphors efficiently receive VUV, whereby it is possible to realize to minimal damage of phosphors due to sputtering while maintaining high emission intensity.

Inorganic phosphors employed in such phosphors include three main types such as blue light emitting phosphors, green light emitting phosphors, and red light emitting phosphors.

Specific examples of each of the above phosphor compounds are listed below.

### (Blue Light Emitting Phosphor Compounds)

(BL-1) : Sr₂P₂O₇:Sn ⁴⁺
(BL-2) : Sr₄Al₁₄O₂₅ : Eu²⁺
(BL-3): BaMgAl₁₀O₁₇: Eu²⁺
(BL-4) : SrGa₂S₄ : Ce³⁺
(BL-5) : CaGa₂S₄ : Ce³⁺
(BL-6): (Ba,Sr) (Mg,Mn)Al₁₀O₁₇:Eu²⁺
(BL-7) : (Sr, Ca, Ba, Mg) ₁₀ (PO₄) ₆Cl₁₂ : Eu²⁺
(BL-8): ZnS:Ag
(BL-9): CaWO₄
(BL-10): Y₂SiO₅:Ce
(BL-11): ZnS:Ag,Ga,Cl
(BL-12): Ca₂B₅O₉Cl :Eu²⁺
(BL-13) : BaMgAl₁₄O₂₃:Eu²⁺
(BL-14) : BaMgAl₁₀O₁₇ :Eu²⁺, Tb³⁺, Sm²⁺
(BL-15) : BaMgAl₁₄O₂₃:Sm²⁺
(BL-16) : Ba₂Mg₂Al₁₂O₂₂:Eu²⁺
(BL-17) : Ba₂Mg₄Al₈O₁₈:Eu²⁺
(BL-18) : Ba₃Mg₅Al₁₈O₃₅:Eu²⁺
(BL-19) : (Ba,Sr,Ca) (Mg,Zn,Mn)Al₁₀O₁₇:Eu²⁺
(Green Light Emitting Phosphor Compounds)
(GL-1) : (Ba,Mg)Al₁₆O₂₇:Eu²⁺,Mn²⁺
(GL-2) : Sr₄Al₁₄O₂₅:Eu²⁺
(GL-3): (Sr,Ba)Al₂Si₂O₈:Eu²⁺
(GL-4) : (Ba,Mg)₂SiO₄:Eu²⁺
(GL-5) : Y₂SiO₅:Ce³⁺,Tb³⁺
(GL-6) : Sr₂P₂O₇-Sr₂B₂O₅:Eu²⁺
(GL-7) : (Ba,Ca,Mg)₅(PO₄)₃Cl:Eu²⁺
(GL-8) : Sr₂Si₃O₈-2SrCl₂: Eu²⁺
(GL-9) : Zr₂SiO₄,MgAl₁₁O₁₉:Ce³⁺,Tb³⁺
(GL-10) : Ba₂SiO₄:Eu²⁺
(GL-11) : ZnS : Cu, Al
(GL-12): (Zn, Cd) S:Cu,Al
(GL-13): ZnS:Cu,Au,Al
(GL-14) : Zn₂SiO₄:Mn²⁺
(GL-15): ZnS:Ag,Cu
(GL-16): (Zn,Cd) S:Cu
(GL-17): ZnS:Cu
(GL-18) : Gd₂O₂S:Tb
(GL-19) : La₂O₂S:Tb
(GL-20) : Y₂SiO₅:Ce,Tb
(GL-21) : Zn₂GeO₄: Mn
(GL-22) : CeMgAl₁₁O₁₉ : Tb
(GL-23) : SrGa₂S₄:Eu²⁺
(GL-24): ZnS:Cu,Co
(GL-25) : MgO · nB₂O₃ : Ce, Tb
(GL-26): LaOBr:Tb,Tm
(GL-27): La₂O₂S:Tb
(GL-28) : SrGa₂S₄:Eu²⁺, Tb³⁺, Sm²⁺
(Red Light Emitting Phosphor Compounds)
(RL-1) : Y₂O₂S : Eu³⁺
(RL-2) : (Ba,Mg)₂SiO₄:Eu³⁺
(RL-3) : Ca₂Y₈ (SiO₄) ₆O₂ : Eu³⁺
(RL-4) : LiY₉(SiO₄)₆O₂:Eu³⁺
(RL-5): (Ba, Mg) Al₁₆O₂₇: Eu³⁺
(RL-6) : (Ba,Ca,Mg)₅(PO₄)₃Cl:Eu³⁺
(RL-7) : YVO₄ : Eu³⁺
(RL-8) : YVO₄ : Eu³⁺, Bi³⁺
(RL-9): CaS:Eu³⁺
(RL-10) : Y₂O₃ : Eu³⁺
(RL-11) : 3.5MgO,0.5MgF₂GeO₂:Mn
(RL-12) : YAlO₃ : Eu³⁺
(RL-13) : YBO₃ : Eu³⁺
(RL-14) : (Y, Gd) BO₃: Eu³⁺

It is preferable to employ (GL-14) Zn₂SiO₄:Mn²⁺ listed above to prepare the phosphors according to the present invention.

The production method of the above phosphors will now be described.

A phosphor production method in the present embodiments is constituted of a precursor forming step which forms phosphor precursors, a firing step which prepares phosphor particles via firing the precursors prepared by the precursor forming step, and a surface treatment step which applies an etching treatment on the surface of the phosphor particles prepared by the firing step.

Each step will now be detailed.

Initially, the precursor forming step will be described.

In the precursor forming step, precursors which are intermediates of phosphors are synthesized, and in the subsequent firing step, the resulting precursors are fired at a predetermined temperature, whereby phosphor particles are prepared.

Incidentally, it is preferable that the aforesaid precursors are synthesized by a liquid phase method. "Liquid phase method", as described herein, refers to a method which synthesizes precursors in the presence of liquid or in liquid, and also called a liquid phase synthetic method. In the liquid phase method, since raw phosphor materials undergo reaction in a liquid phase, a reaction between element ions constituting a phosphor is performed, whereby a phosphor, which results in high stoichiometric purity, tends to be prepared. Further, compared to the solid phase method which produces phosphors employing an inter-solid phase reaction and repeating a pulverization step, it is possible to prepare particles at a very small diameter without the pulverization step, whereby it is possible to minimize lattice defects in crystals due to applied stress during pulverization and also to minimize degradation of the desired emission efficiency.

Further, in the liquid phase method of the present embodiments, common crystallization methods represented by chilled crystallization and a sol/gel method are employed, but reaction crystallization may preferably be employed.

The precursor production method employing the sol/gel method refers to the following one. Commonly employed are hosts, activators or co-activators such as metal alkoxides such as Si (OCH₃) or Eu³⁺ (CH₃COCHCOCH₃) ₃, metal complexes such as Mg[Al(OC₄H₉)₃]₂ which are prepared by adding metal magnesium to an Al(OC₄H₉)₃ 2-butanol solution, or double alkoxides prepared by adding metals to these organic solvent solutions, metal halides, organic acid metal salts, or metallic elements. These are blended in necessary amounts and allowed to undergo thermal or chemical polycondensation.

"Inorganic phosphor precursor production method", employing the reaction crystallization method, refers to a method which prepares precursors by mixing a solution incorporating elements which are employed as a raw material of phosphors or raw material gases in a liquid or gas phase while utilizing crystallization phenomena. "Crystallization phenomena", as described herein, refer to the phenomenon in which when the state of a mixture system results in a change of state due to physical or chemical atmosphere changes such as cooling, evaporation, pH change, or concentration, or due to chemical reaction, the solid phase is subjected to deposition from a liquid phase. In the reaction crystallization, included is a production method employing a physical and chemical operation to result in the above crystallization phenomena.

Any solvents applied to the reaction crystallization method may be employed without limit as long as the raw materials are soluble. However, in view of ease of counter supersaturation, water is preferable. When a plurality of reaction raw materials is employed, they may be added simultaneously or sequentially, and it is possible to properly select an optimal order depending on their activities.

Further, during formation of the precursors, in order to produce phosphor particles at a minute diameter and a narrow particle size distribution, it is preferable that including the reaction crystallization method, at least two raw material solutions are subjected to in-liquid addition in the presence of a protective colloid. Further, depending on the type of phosphors, it is more preferable to regulate various physical properties such as temperature during reaction, an addition rate, a stirring rate, or pH, and ultrasonic waves may be applied during the reaction. Still further added may be surface active agents and polymers to control the particle diameter.

In addition, one of the preferred embodiments is that after adding raw materials, if desired, the above solution is subjected to either a concentration or a ripening treatment.

In the reaction crystallization method in the present embodiment, as shown in Fig. 1, a plurality of flow channels is structured to be a Y-shaped in the horizontal view. It is possible to employ so-called Y-letter type reaction apparatus 1. Y-letter type reaction apparatus 1 is provided with first tank 2 which stores Raw Phosphor Martial Solution A and tank 3 which stores another Raw Phosphor Material Solution B. Each of first tank 2 and second tank 3 is connected to the one end of first flow channel 4 and second flow channel 5, respectively. In the mid-course section of these first flow channel 4 and second flow channel 5, pumps P1 and P2 to feed each of Phosphor Raw Material Solutions A and B are arranged, respectively. Further, the apparatus is structured so that third channel 6 is connected to the other end of each of flow channels 4 and 5 via connecting section C, and in connecting section C, Raw Phosphor Material Solutions A and B which are continuously fed via each of flow channels 4 and 5 are subjected to collision and mixing.

Below the discharge outlet of third flow channel 6, arranged is ripening vessel 7, into which the mixed solution after mixing is continuously fed. Further, in ripening vessel 7, stirring blade 8 to stir the mixed solution is equipped and above stirring blade 8 is connected to driving device 9 which is a rotary motive source.

Employed reaction apparatuses are not limited to Y-letter type reaction apparatus 1 and may be a so-called T-letter type production apparatus in which the configuration of the flow channel only differs to form a T-letter type from the horizontal view.

Further, the aforesaid protective colloid functions to minimize mutual aggregation of minutely pulverized precursor particles. Any of various types of natural or synthetic polymer compounds may be applicable but proteins may be specifically preferably applicable.

Examples of proteins include gelatin, water-soluble protein, and water-soluble glycopeptides. Specific examples include albumin, ovalbumin, casein, soybean protein, synthetic protein, and protein which is synthesized via gene engineering.

Further cited as gelatin may, for example, be lime-treated gelatin, and acid-steped gelatin, and these may be simultaneously employed. Still further employed may be hydrolyzed products and enzyme decomposition products of the above types of gelatin.

Further, the protective colloid need not to be composed of only a single component, and various types of binders may be blended. Specifically, for example, the above gelatin and graft polymers with other polymer molecules may be applied.

The average molecular weight of the protective colloid is preferably at least 10,000, is more preferably 10,000 - 300,000, but is most preferably 10,000 - 30,000. Further, the protective colloid may be added at least one raw material solution and may be added to all raw material solutions. It is possible to control the diameter of precursor particles depending on the added amount of the protective colloid and the addition rate of the reaction liquid.

Further, since various characteristics of phosphor particles such as diameter and size distribution, and emission properties of phosphor particles after firing, vary significantly depending on precursors aspects, and it is preferable to sufficiently decrease the diameter of precursor particles by control of the particle diameter of the precursors during the precursor forming step. Further, when the size of precursor particles is markedly decreased, mutual aggregation of precursor particles tends to result. Consequently, it is critical to synthesize precursors by minimizing mutual aggregation of precursor particles via addition of a protective colloid, resulting in easer particle diameter control. When reaction is performed in the presence of the above protective colloid, it is necessary to consider sufficiently control of the particle size distribution of precursors, and removal of impurities such as by-product salts.

In the above precursor forming step, it is preferable that the particle diameter is properly controlled, and after the synthesis of precursors, if desired, the precursors are recovered employing methods such as filtration, evaporation to dryness, or centrifugal separation, followed by a washing step and a desalting step.

The desalting step refers to one which removes impurities are applicable such as by-product salts from precursors, and various methods such as a membrane separation method, an aggregation precipitation method, an electrophoretic method, an ion-exchange resin employing method, a noodle washing method, or an ultrafiltration membrane employing method.

The timing of the desalting step is not limited to the present embodiment. It may be performed immediately after precursor formation, and depending on reaction progress of the raw materials, a plurality of desalting steps may be performed.

Further, after the desalting step, a drying step may further be performed. It is preferable that such drying step is performed after the desalting step, and any methods such as vacuum drying, airflow drying, fluid-layer drying, or spray drying may be applicable. Drying temperature is not particularly limited, but a temperature is preferred which is approximately equal to or higher than the evaporation temperature of the employed solvents. When the drying temperature is excessive, drying and firing are simultaneously carried out and phosphors are prepared without a subsequent firing step. Consequently, the drying temperature is preferably in the range of 50 - 300 °C.

The firing step will now be described.

Phosphors according to the present invention, such as rare earth borate phosphors, silicate phosphors or aluminic acid phosphors, are prepared in such a manner that a plurality of firing treatments is applied to each of the precursors.

Conditions (hereinafter referred to as firing conditions) during firing treatment will now be described.

Firing conditions include firing atmosphere, firing temperature, firing frequency, and firing duration.

Of these, firing atmosphere refers to an inert gas atmosphere, in which the oxygen concentration is preferably at most 100 ppm, but is more preferably at most 10 ppm.

Further, it is preferable that hydrogen concentration is at most 1% and the remaining component is nitrogen. It is more preferable that the nitrogen concentration is 100%.

The firing temperature is maintained preferably in the range of 1,000 - 1,400 °C after replacing the gas in the interior of the firing apparatus with inert gas, and more preferably is in the range of 1,100 - 1,300 °C.

In the first firing step, the firing duration is preferably in the range of 3 - 10 hours at a constant temperature, but is more preferably in the range of 6 - 9 hours. On the other hand, in each subsequent firing step after the second firing step, the firing duration is preferably in the range of 2 - 5 hours at a constant temperature, but is more preferably in the range of 2 - 3 hours.

Employed as a firing apparatus or a firing vessel may be those known in the art. For example, a box kiln, a crucible kiln, a cylindrical pipe type, a boat type, or a rotary kiln is preferably employed.

Further, during the firing treatment, if desired, sintering inhibitors may be incorporated. When such sintering inhibitors are incorporated, they may be incorporated in the form of a slurry during f precursor formation, or firing may be carried out after mixing sintering inhibiting powders with the dried precursors.

Sinter inhibitors are not particularly limited. It is possible to select appropriate ones depending on the type of phosphors and the firing conditions. For example, depending on the firing temperature range of the phosphors, metal oxides such as TiO₂ may be preferably employed for firing below 1,000 °C, SiO₂ may be employed preferably for firing below 1,000 °C, and Al₂O₃ may be preferably employed for firing below 1,700 °C. In the present invention, it is preferable to employ Al₂O₃.

The overall firing step in the present embodiment is composed of a plurality of firing steps, the number of which is preferably 2 - 4, but is more preferably at most 3.

One firing step, as described herein, refers to a single cycle step composed of a heating step from room temperature (25 ± 3 °C) to a predetermined temperature, a step of maintaining at the predetermined temperature, and a cooling step from the predetermined temperature to room temperature.

Cooling steps are not particularly limited and may properly be selected from cooling methods known in the art. Employed may be any of the methods such as one in which the temperature is lowered while allowed to stand and another in which the temperature is forcibly lowered by control of the temperature employing a cooling device.

Further, a procedure may be acceptable in which after the cooling treatment, ambient air is introduced into the interior of the firing apparatus and inert gases are reintroduced followed by the subsequent firing step.

Further, if desired, after firing, a reduction treatment or an oxidation treatment may be carried out. Still further, after the firing step, a surface treatment step and a dispersion step may be provided, while a classification step may also be provided. Each of these treatments will now be detailed.

Initially described will be the surface treatment step.

In the surface treatment step, surface treatments such as adsorption or covering are carried out for various purposes. In such surface treatments, application timing differs depending on purposes. It has been confirmed that by properly selecting the time of application, the resulting effects are pronounced. For example, when a phosphor surface is covered with oxides incorporating at least one element selected from the group consisting of Si, Ti, Al, Zr, Zn, In, and Sn, it is possible to retard degradation of crystallinity of phosphors during the dispersion treatment. Further, by minimizing trapping of excitation energy at surface defects of phosphors, it is possible to retard the decrease in emission intensity. Further, at any time during the dispersion step, when the phosphor surface is covered with organic polymer compounds, characteristics such as weather resistance are enhanced, whereby it is possible to prepare phosphors which exhibit excellent durability. The thickness of the covering layer and the covering ratio during application of these surface treatments may be appropriately controlled.

The dispersion step will now be described.

It is preferable that the following dispersion treatment is applied to phosphor particles prepared in the above firing step.

Dispersion treatment methods include one in which minute particles are formed in such a manner that media are allowed to move in a device such as a high rate stirring type impeller type homogenizer, a colloid mill, a roller mill, a ball mill, a vibration mill, an attritor, a planet ball mill, or a sand mill to form minute particles via both crushing and shearing forces, or another method which employs a dry type homogenizer such as a cutter mill, a hammer mill, or a jet mill, an ultrasonic homogenizer, or a high pressure homogenizer.

Of these, in the present embodiment, the use of wet system media type homogenizers, specifically employing media, are preferable but the use of a continuous wet system media type homogenizers capable of performing a continuous dispersion treatment is more preferable. Further, an embodiment is also applicable in which a plurality of continuous wet system media type homogenizers is serially connected. As used herein, the phrase "capable of performing a continuous dispersion treatment" refers to an embodiment in which dispersing treatment is performed while at least a phosphor and a dispersion medium, in an amount of a constant ratio per unit time are continuously fed to a homogenizer and simultaneously, a dispersion produced in the interior of the above homogenizer is continuously discharged from the homogenizer while being pushed out due to the above feeding. In the phosphor production method, when a wet system media type homogenizer using media is employed in the dispersion step, either a vertical or a horizontal dispersion chamber vessel may be selected.

Finally, the etching step will be described.

Phosphors of the present embodiment exhibit no function in which emission intensity is enhanced by convex portions, as seen in electric field light emission type phosphors. Consequently, in view of closely packing phosphor particles into the phosphor layer and of applying a uniform etching treatment to the surface of these phosphor particles, it is preferable that the etching treatment is applied to phosphor particles which have minimal or no convex portions.

It is possible to select the proper etching step depending on impurities on the surface of phosphor particles. For example, a physical method may be applicable which scrapes the surface employing minute particles or ion sputtering. However, a chemical method is effective such that surface impurities are dissolved by immersing phosphor particles into an etching liquid. In such a case, it is necessary to carefully carry out the etching since erosion of the phosphor particles themselves by the etching solution results in a decrease in emission intensity.

Further, the type of the etching solution is determined depending on impurities. It may be acidic or basic, while it may be an aqueous solution or an organic solvent. When an aqueous acidic solution is employed, desired effects markedly result, whereby it is particularly preferable to employ a strong acid.

It s possible to employ, as a strong acid, hydrochloric acid, nitric acid, sulfuric acid, phosphoric acid, or perchloric acid. Of these, preferred are hydrochloric acid, nitric acid and sulfuric acid, and further hydrochloric acid is particularly preferred.

Further, it is preferable that after the etching treatment, the etching liquid is removed while performing water washing.

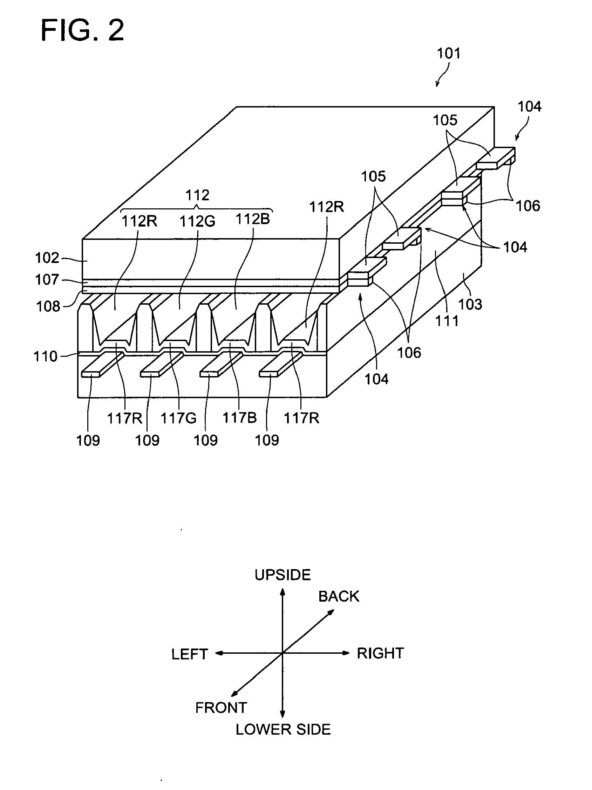

With reference to Figs. 2 - 4, PDPs utilizing the aforesaid phosphors will now be described.

Generally, PDPs are mainly divided to a DC type in which direct current voltage is applied based on the electrode structure and the operation mode, or an AC type in which alternating current voltage is applied. In the present embodiment, detailed description will be made with reference to the AC type PDP shown in Fig. 2.

As shown in Fig. 2, PDP 101 in the present embodiment is constituted of front plate 102 molded to a flat plate and rear plate 103 which is in the shape approximately similar to front plate 102 and is arranged to face one surface of front plate 102. Of substrates 102 and 103, front plate 102 transmits visible light generated from the discharge cell and displays various kinds of information on the substrate and functions as the display image plane of PDP 101.

Materials such as soda lime glass, so-called blue plate glass, which transmits visible light, are preferably employed and the thickness is preferably in the range of 1 - 8 mm, but is more preferably 2 mm.

Further, in front plate 102, a plurality of display electrodes 104 is arranged at a constant interval on the plane of front plate 102 facing rear plate 103. Each of these display electrodes 104 is composed of transparent electrode 105 which is formed to a wide band, and bus electrode 106 which is formed in the same shape as transparent electrode 105 and is structured so that bus electrode 106 is laminated on the upper surface of transparent electrode 105.

In a plane view, display electrode 104 is at right angles to partition 112, and two electrodes form one group under such an arrangement that one electrode faces the other while provided with the predetermined discharge gap.

It is possible to employ, as transparent electrode 105, transparent electrodes such as a NESA film, the sheet resistance of which is preferably at most 100 Ω. Further, the width of transparent electrode 5 is preferably in the range of 10 - 200 µm.

Bus electrode 106 is employed to decrease resistance and is formed via Cr/Cu/Cr sputtering. Further, bus electrode 106 is formed so that its width is less than that of transparent electrode 105, and the width is preferably in the range of 5 - 50 µm.

The entire surface of display electrode 104 arranged on front plate 102 is covered with dielectric layer 107. Above dielectric layer 107 may be composed of dielectrics such as glass at a low melting point. The thickness is preferably in the range of 20 - 30 µm.

The entire upper surface of dielectric layer 107 is covered with protective layer 108. It is possible to employ, as above protective layer 108, an MgO film. The thickness is preferably in the range of 0.5 - 50 µm.

On the other hand, it is possible to employ, as rear plate 103, arranged to face one surface of front plate 102, soda lime glass, so-called blue plate glass in the same manner as for front plate 102. The thickness is preferably in the range of 1 - 8 mm, but is more preferably about 2 mm.

A plurality of address electrodes 109 is arranged on the side facing front plate 102 of aforesaid rear plate 103. Each of these address electrodes 109 is formed in the same shape as transparent electrode 105 and bus electrode 106. In the plane view, above address electrodes 109 are arranged at a constant interval to be in right angles to aforesaid display electrode 104. Further, it is possible to employ as address electrodes 109, metal electrodes such as a thick Ag film electrode. The width is preferably in the range of 100 - 200 µm.

Further, the entire surface of address electrodes 109 is covered with dielectric layer 110. It is possible to form above dialectic layer 110 employing dielectrics such as glass at a low melting point. The thickness is preferably in the range of 20 - 30 µm.

Arranged on the upper surface of dielectric layer 110, are partitions 111 in the shape vertically projected against rear plate 3. Partitions 111 are formed to be in long-length and are arranged on both sides of address electrode 109 so that each of the longitudinal direction of adjacent partitions 111 is parallel to each other.

It is possible to form partitions 111 employing dielectrics such as glass at a low fusing point. The width is preferably in the range of 10 - 500 µm, but is more preferably about 100 µm, while the height of partitions 111 is commonly in the range of 10 - 100 µm, but is preferably about 50 µm.

Discharge cells 112 in the present embodiment are called a stripe type, since when front plate 102 and rear plate 103 are horizontally arranged, partitions 111 are arranged to be parallel at a predetermined interval, namely in the form of a stripe.

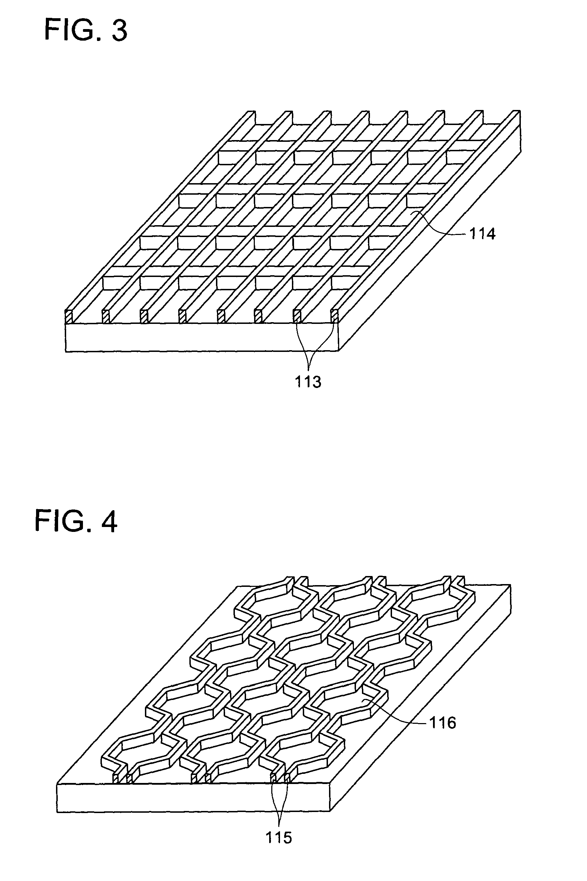

The structure of the discharge cell is not limited to such a stripe type. As shown in Fig. 3, lattice type discharge cells 114 may be employed in which in a plane view, partitions 113 are arranged to form in a lattice. As shown in Fig. 4, discharge cell 116 may also be employed which is shaped as a honeycomb (octagonal) composed of a group of partitions 115, each of which is symmetrically curved.

In each of discharge cells 112R, 112G, and 112B, any of phosphor layers 117R, 117G, and 117B composed of phosphors emitting any of red (R), green (G), and blue (B), produced in the present example, are arranged in a specific order. Further, discharge gases are sealed in the internal hollow of each of discharge cells 112R, 112G, and 112B. In the plane view, arranged is at least one point where display electrode 104 and address electrode 109 intersect. Further, the thickness of each of phosphor layers 117R, 117G, and 117B is not particularly limited, but is preferably in the range of 5 - 50 µm.

Each of phosphor layers 117R, 117G, and 117B is formed on the side of the partition and the bottom surface. These phosphor layers 117R, 117G, and 117B are formed as follows. Initially, a phosphor paste is produced by dispersing the above phosphors into a mixture of binders, solvents, and dispersing agents. Subsequently, the resulting paste, after appropriate viscosity regulation, is applied onto or filled in each of corresponding discharge cells 112R, 112G and 112B, and finally dried or fired.

It is possible to prepare the phosphor paste employing conventional methods known in the art. Further employed as a method to apply the phosphor paste into each of discharge cells 112R, 112G, and 112B or fill the same into each of the above cells, may be any of various methods such as a screen printing method, a photoresist film method, or an ink-jet method.

In PDP 101 constituted as above, during display, a discharge cell is selected which conducts display by allowing to perform selectively trigger discharge between address electrode 109 and any one of display electrodes 104 forming one group. By performing sustain discharge between display electrodes 104 forming a group in the selected discharge cell, ultraviolet radiation is generated due to discharge gases, whereby visible light is generated from phosphors layers 117R, 117G, and 117B.

As noted above, PDP 1 of the present embodiment incorporates discharge cell 112 which is produced by employing the aforesaid phosphors, whereby it becomes possible to realize enhancement of emission intensity of discharge cell 112. Subsequently, it is possible to realize enhancement of emission intensity of PDP 1.

### EXAMPLES

The following examples explain production methods of the phosphors of the present invention, and preferred embodiments using the same.

### (Example 1)

In this example, a precursor of a green-emitting phosphor was synthesized using Zn₂SiO₄:Mn²⁺ as a raw material, and then Phosphors 1, 2, 3, 4, 5, 6, 7, 8, 9, and 10 were prepared by firing the obtained precursor under various conditions. Evaluation based on the relative emission intensity of the above phosphors before and after sputtering treatments was conducted as an alternative evaluation since the phosphors are readily damaged.

At first, a synthetic method of producing precursors will now be described. Colloidal silica containing 45 g of silicon dioxide (PL-3, produced by Fuso Chemical Co., Ltd.), 219 g of aqueous ammonia (28%), and pure water were mixed, and the aqueous mixture was increased in volume to 1,500 cc, which was referred to as Liquid A. Further, 424 g of zinc nitrate hexahydrate (at a purity of 99.0%, produced by Kanto Chemical Co., Inc.) and 21.5 g of manganese nitrate hexahydrate (purity: 98.0%, also produced by Kanto Chemical Co., Inc.) were dissolved in pure water, and the aqueous mixture was increased in volume to 1,500 cc, which was designated as Liquid B.

Above Liquids A and B were each stored in tanks 2 and 3 of Y-shaped reactor 1, as shown in Fig. 1, and maintained at a temperature of 40 °C. Subsequently, Liquids A and B were supplied to ripening container 7 at a rate of 1,200 cc/min through pumps P1 and P2, respectively, and the resulting precipitates were diluted with pure water. Afterward, solid-liquid separation was carried out via pressure filtration, and then a dried precursor was obtained by drying the residue at a temperature of 100 °C for 12 hours.

Further, Phosphors 1 and 2 were prepared by firing the obtained precursor under an atmosphere of 100% nitrogen, and an atmosphere containing 20% oxygen, respectively, at a temperature of 1,240 °C for 5 hours in a first firing step, wherein the firing conditions, except the atmosphere, remained unchanged.

Further, Phosphor 3 was prepared by firing obtained Phosphor 1 under an atmosphere of 100% nitrogen at a temperature of 1,240 °C for 5 hours in a second firing step. Subsequently, Phosphor 4 was prepared by refiring obtained Phosphor 3 in a third firing step under the same conditions as in the second step. On the other hand, Phosphor 5 was prepared by firing Phosphor 1 under an atmosphere containing 20% oxygen at a temperature of 1,240 °C for 5 hours in a second firing step. Subsequently, Phosphor 6 was prepared by refiring obtained Phosphor 5 in a third firing step under the same conditions as in the second step.

Yet further, Phosphor 7 was prepared by firing obtained Phosphor 2 under an atmosphere containing 20% oxygen at a temperature of 1,240 °C for 3 hours in a second firing step. Subsequently, Phosphor 8 was prepared by refiring obtained Phosphor 7 in a third firing step under the same conditions as in the second one. On the other hand, Phosphor 9 was prepared by firing Phosphor 2 under an atmosphere of 100% nitrogen at a temperature of 1,240 °C for 5 hours in a second firing step. Subsequently, Phosphor 10 was prepared by refiring obtained Phosphor 9 in a third firing step under the same conditions as in the second one. The firing conditions for preparing Phosphors 1, 2, 3, 4, 5, 6, 7, 8, 9, and 10 are listed together in Table 1.

**Table 1**

| Phosphor No. | First Firing Step | | | Second Firing Step | | | Third Firing Step | | | Remarks |
|---|---|---|---|---|---|---|---|---|---|---|
| | Atmosphere | Temperature | Duration | Atmosphere | Temperature | Duration | Atmosphere | Temperature | Duration | |
| 1 | nitrogen 100% | 1240°C | 5 hours | | | | | | | Comp. |
| 2 | oxygen 20% | 1240 °C | 5 hours | | | | | | | Comp. |
| 3 | nitrogen 100% | 1240 °C | 5 hours | nitrogen 100% | 1240°C | 3 hours | | | | Inv. |
| 4 | nitrogen 100% | 1240 °C | 5 hours | nitrogen 100% | 1240 °C | 3 hours | nitrogen 100% | 1240°C | 3 hours | Inv. |
| 5 | nitrogen 100% | 1240 °C | 5 hours | oxygen 20% | 1240 °C | 3 hours | | | | Comp. |
| 6 | nitrogen 100% | 1240 °C | 5 hours | oxygen 20% | 1240 °C | 3 hours | oxygen 20% | 1240 °C | 3 hours | Comp. |
| 7 | oxygen 20% | 1240°C | 5hours | oxygen 20% | 1240°C | 3 hours | | | | Comp. |
| 8 | oxygen 20% | 1240°C | 5 hours | oxygen 20% | 1240°C | 3 hours | oxygen 20% | 1240°C | 3 hours | Comp. |
| 9 | oxygen 20% | 1240 °C | 5 hours | nitrogen 100% | 1240 °C | 3 hours | | | | Comp. |
| 10 | oxygen 20% | 1240°C | 5hours | nitrogen 100% | 1240°C | 3hours | nitrogen 100% | 1240°C | 3hours | Comp. |

| | | | | | | | | | | |
|---|---|---|---|---|---|---|---|---|---|---|
| Inv.: Present Invention, Comp.: Comparative Example | | | | | | | | | | |

Further, there was added an equal amount of water with respect to each of above Phosphors 1, 2, 3, 4, 5, 6, 7, 8, 9, and 10 to each thereof, and each of the resulting aqueous media was cracked and dispersed using a pot mill. Afterward, classification was conducted using a sieve to remove minute and coarse particles, and a dispersion of each of the phosphors was obtained. Subsequently, while the phosphor dispersion after classification was maintained at 40 °C, 0.002 mol of 2N hydrochloric acid, per gram of the phosphor, was added, and stirred for 20 minutes. A washing treatment was conducted in pure water, followed by drying at a temperature of 100 °C for 12 hours to complete the series of production methods of the phosphors.

Further, an evaluation method will now be described. Each of the phosphors was evaluated using, as an index, a sputtering retention rate, which is calculated based on its relative emission intensity before and after sputtering. The calculating method of the sputtering retention rate is detailed below.

Each of obtained Phosphors 1, 2, 3, 4, 5, 6, 7, 8, 9, and 10 was placed into a vacuum chamber at a pressure of 0.1 - 1.5 Pa, and exposed to VUV using a 146 nm excimer lamp (produced by Ushio Inc.). Further, the peak intensity of green light obtained via exposure was measured with a detector (MCPD-3000, produced by Otsuka Electronics Co., Ltd.). Relative emission intensity, which is a relative value with respect to 100 as the relative emission intensity of Phosphor 1, was calculated. Each of the obtained values, denoted as "relative emission intensity", is listed in Table 2.

Further, each of obtained Phosphors 1, 2, 3, 4, 5, 6, 7, 8, 9, and 10 was placed into the interior of the discharge space filled with 100% argon of a sputtering apparatus (SC-701, produced by Sanyu Electron Co., Ltd.) and sputtering was carried out by discharging via current continuity at 1 mA for 15 minutes. Then, relative emission intensity was calculated by the above method to obtain "Relative Emission Intensity after Sputtering".

Further, the above "Relative Emission Intensity after Sputtering" was divided by "Relative Emission Intensity", which had been measured during the first step. The value was converted to a percentage, denoted as "Sputtering Retention Rate", in Table 2. The higher the numeral value of this sputtering retention rate is, the less the decrease of emission intensity is, which means that the Phosphor is not readily subjected to damage to VUV, ions, or electrons.

**Table 2**

| Phosphor No. | Relative Emission Intensity | Sputtering Retention Rate | Remarks |
|---|---|---|---|
| 1 | 100 | 75% | Comparative Example |
| 2 | 80 | 70% | Comparative Example |
| 3 | 110 | 95% | Present Invention |
| 4 | 110 | 98% | Present Invention |
| 5 | 100 | 75% | Comparative Example |
| 6 | 100 | 75% | Comparative Example |
| 7 | 80 | 70% | Comparative Example |
| 8 | 70 | 80% | Comparative Example |
| 9 | 90 | 80% | Comparative Example |
| 10 | 100 | 80% | Comparative Example |

As a result, when Phosphor 1, fired only once under an atmosphere of 100% nitrogen, was compared with Phosphors 3 and 4, each fired two and three times under the same atmosphere, it clearly showed that Phosphors 3 and 4 exhibited higher relative emission intensity and higher sputtering retention rate than Phosphor 1. Further, when Phosphor 5 obtained from Phosphors 3 and 4 by changing only the firing atmosphere to an atmosphere of 20% oxygen was compared with Phosphor 6 obtained by changing the firing atmosphere in each of a second and third firing step to an atmosphere of 20% oxygen, it became clear that Phosphors 3 and 4 exhibited higher emission intensity and higher sputtering retention rate than Phosphors 5 and 6.

On the other hand, Phosphor 2, fired only once under an atmosphere of 20% oxygen as well as Phosphors 7 and 8 fired twice and three times, respectively, under the same atmosphere, exhibited lower relative emission intensity and lower sputtering retention rate than Phosphors 3 and 4 described above. Further, when Phosphor 2 was compared with Phosphor 9 obtained by changing only the firing atmosphere to an atmosphere of 100% nitrogen and Phosphor 10 obtained by changing the firing atmosphere in each of a second and third firing steps to an atmosphere of 100% nitrogen, Phosphors 9 and 10 exhibited higher relative emission intensity than Phosphor 2. However, when Phosphors 9 and 10 were compared with Phosphors 3 and 4 described above, Phosphors 3 and 4 exhibited higher relative emission intensity and higher sputtering retention rate than Phosphors 9 and 10. These results indicated that Phosphor 1 obtained via a first firing step and Phosphors 2, 5, 6, 7, 8, 9, and 10 fired under an atmosphere containing oxygen in any of the firing steps exhibited markedly lower relative emission intensity and lower sputtering retention rate than Phosphor 3 fired under an atmosphere of 100% nitrogen in a first and second firing steps and Phosphor 4 fired under an atmosphere of 100% nitrogen in a first, second, and third firing steps. Therefore, it has become clear that desired phosphors may be obtained via a firing step composed of a plurality of such steps, in which precursors are fired under an atmosphere of 100% nitrogen, that is, under an inert gas atmosphere.

### (Example 2)

Further, Phosphors 11 and 12 were each prepared by firing Phosphor 1 obtained in Example 1 at temperatures of 900 °C and 1,240 °C under an atmosphere of 100% nitrogen for 5 hours, wherein the firing conditions except temperature remained unchanged.

Phosphor 13 was prepared by firing obtained Phosphor 11 under an atmosphere of 100% nitrogen at a temperature of 1,240 °C for 3 hours. Further, Phosphor 14 was prepared by refiring obtained Phosphor 13 under the same conditions. On the other hand, Phosphor 15 was prepared by firing Phosphor 12 under an atmosphere of 100% nitrogen at a temperature of 1,240 °C for 3 hours. Yet further, Phosphor 16 was prepared by refiring obtained Phosphor 13 under the same conditions. The firing conditions for obtained Phosphors 11, 12, 13, 14, 15, and 16 are listed together in Table 3.

**Table 3**

| Phosphor No. | First Firing Step | | | Second Firing Step | | | Third Firing Step | | | Remarks |
|---|---|---|---|---|---|---|---|---|---|---|
| | Atmosphere | Temperature | Duration | Atmosphere | Temperature | Duration | Atmosphere | Temperature | Duration | |
| 3 | nitrogen 100% | 1240 °C | 5 hours | nitrogen 100% | 1240 °C | 3 hours | | | | Inv. |
| 4 | nitrogen 100% | 1240 °C | 5 hours | nitrogen 100% | 1240 °C | 3 hours | nitrogen 100% | 1240 °C | 3 hours | Inv. |
| 11 | nitrogen 100% | 900 °C | 5 hours | | | | | | | Comp. |
| 12 | nitrogen 100% | 1500°C | 5 hours | | | | | | | Comp. |
| 13 | nitrogen 100% | 900 °C | 5 hours | nitrogen 100% | 1240 °C | 3 hours | | | | Inv. |
| 14 | nitrogen 100% | 900 °C | 5 hours | nitrogen 100% | 1240 °C | 3 hours | nitrogen 100% | 1240 °C 1240 | 3 hours | Inv. |
| 15 | nitrogen 100% | 1500 °C | 5 hours | nitrogen 100% | 1240 °C | 3 hours | | | | Inv. |
| 16 | nitrogen 100% | 1500 °C | 5 hours | nitrogen 100% | 1240 °C | 3 hours | nitrogen 100% | 1240 °C | 3 hours | Inv. |

| | | | | | | | | | | |
|---|---|---|---|---|---|---|---|---|---|---|
| Inv.: Present Invention, Comp.: Comparative Example | | | | | | | | | | |

Each of obtained Phosphors 11, 12, 13, 14, 15, and 16 was pulverized, dispersed, classified, acid-treated, washed, and dried in the aforesaid order in the same manner as in Example 1. Relative emission intensity and sputtering retention rate of Phosphors 11, 12, 13, 14, 15, and 16, which had undergone every above treatment, were measured in the same manner as in Example 1. The obtained numeric values are listed in Table 4.

**Table 4**

| Phosphor No. | Relative Emission Intensity | Sputtering Retention Rate | Remarks |
|---|---|---|---|
| 3 | 110 | 95% | Present Invention |
| 4 | 110 | 98% | Present Invention |
| 11 | 90 | 70% | Comparative Example |
| 12 | 100 | 75% | Comparative Example |
| 13 | 100 | 95% | Present Invention |
| 14 | 105 | 95% | Present Invention |
| 15 | 105 | 95% | Present Invention |
| 16 | 105 | 95% | Present Invention |

As a result, when Phosphor 1 fired under an atmosphere of 100% nitrogen at a temperature of 900 °C for 5 hours was compared with Phosphor 13 prepared by firing Phosphor 11 at a temperature of 1,240 °C for 3 hours in the following second firing step, as well as Phosphor 14 prepared by firing Phosphor 11 at a temperature of 1,240 °C for 3 hours in both the following second and third firing steps, Phosphors 13 and 14 exhibited higher relative emission intensity and sputtering retention rate than Phosphor 11. Further, when Phosphor 12, fired under an atmosphere of 100% nitrogen at a temperature of 1,500 °C for 5 hours, was compared with Phosphor 15 prepared by firing Phosphor 12 at a temperature of 1,240 °C for 3 hours in the following second firing step and Phosphor 16 prepared by firing Phosphor 12 at a temperature of 1,240 °C for 3 hours both in the following second and third firing steps, Phosphors 15 and 16 exhibited higher relative emission intensity and higher sputtering retention rate than Phosphor 12. These results indicated that when Phosphors 11, 13, and 14 as well as 12, 15, and 16 exhibited lower relative emission intensity, or both lower relative emission intensity and lower sputtering retention rate than Phosphors 1, 3, and 4 fired at a temperature of 1,240 °C in a first firing step, wherein the firing conditions except temperature remained unchanged. Therefore, it becomes clear that the firing temperature in a first firing step is preferably in the range of 1,000 - 1,400 °C.

### (Example 3)

Further, Phosphors 17 and 18 were each prepared by firing Phosphor 1 obtained in Example 1 at temperatures of 900 °C and 1,500 °C under an atmosphere of 100% nitrogen for 3 hours, wherein the firing conditions, except temperature, remained unchanged.

Phosphor 19 was prepared by firing obtained Phosphor 17 under an atmosphere of 100% nitrogen at a temperature of 1,240 °C for 3 hours. On the other hand, Phosphor 20 was prepared by firing Phosphor 18 under an atmosphere of 100% nitrogen at a temperature of 1,240 °C for 3 hours. The firing conditions are listed together in following Table 5.

**Table 5**

| Phosphor No. | First Firing Step | | | Second Firing Step | | | Third Firing Step | | | Remarks |
|---|---|---|---|---|---|---|---|---|---|---|
| | Atmosphere | Temperature | Duration | Atmosphere | Temperature | Duration | Atmosphere | Temperature | Duration | |
| 3 | nitrogen 100% | 1240 °C | 5 hours | nitrogen 100% | 1240 °C | 3 hours | | | | Inv. |
| 4 | nitrogen 100% | 1240 °C | 5 hours | nitrogen 100% | 1240 °C | 3 hours | nitrogen 100% | 1240 °C | 3 hours | Inv. |
| 17 | nitrogen 100% | 1240 °C | 5 hours | nitrogen 100% | 900 °C | 3 hours | | | | Inv. |
| 18 | nitrogen 100% | 1240 °C | 5 hours | nitrogen 1000 | 1500 °C | 3 hours | | | | Inv. |
| 19 | nitrogen 100% | 1240 °C | 5 hours | nitrogen 100% | 900 °C | 3 hours | nitrogen 100% | 1240 °C | 3 hours | Inv. |
| 20 | nitrogen 100% | 1240° C | 5 hours | nitrogen 100% | 1500°C | 3 hours | 100% | 1240°C | 3 hours | Inv. |

| | | | | | | | | | | |
|---|---|---|---|---|---|---|---|---|---|---|
| Inv.: Present Invention | | | | | | | | | | |

Each of obtained Phosphors 17, 18, 19, and 20 was pulverized, dispersed, classified, acid-treated, washed, and dried in the aforesaid order in the same manner as in Example 1. Relative emission intensity and sputtering retention rate of Phosphors 17, 18, 19, and 20, which had undergone every above treatment, were measured in the same manner as in Example 1. The obtained numeric values are listed in Table 6.

**Table 6**

| Phosphor No. | Relative Emission Intensity | Sputtering Retention Rate | Remarks |
|---|---|---|---|
| 3 | 110 | 95% | Present Invention |
| 4 | 110 | 98% | Present Invention |
| 17 | 105 | 95% | Present Invention |
| 18 | 105 | 95% | Present Invention |
| 19 | 105 | 95% | Present Invention |
| 20 | 105 | 95% | Present Invention |

As a result, when Phosphor 1 was compared with Phosphor 17 prepared by firing at a temperature of 900 °C for 3 hours in the following second firing step, as well as Phosphor 19 prepared by firing Phosphor 1 at a temperature of 900 °C for 3 hours in the following second firing step and then by firing the resultant material at a temperature of 1,240 °C for 3 hours in a third firing step, Phosphors 17 and 19 each exhibited the same relative emission intensity and sputtering retention rate. Further, when Phosphor 1 was compared with Phosphor 18 fired at a temperature of 900 °C for 3 hours in the following second firing step, as well as Phosphor 20 prepared by firing Phosphor 1 at a temperature of 900 °C for 3 hours in the following second firing step and then by firing the resultant material at a temperature of 1,240 °C for 3 hours in a third firing step, Phosphors 18 and 20 each exhibited the same relative emission intensity and sputtering retention rate. These results indicated that Phosphors 17 and 19 as well as Phosphors 18 and 20 exhibited lower relative emission intensity than Phosphors 3 and 4 fired at a temperature of 1,240 °C in a second firing step, wherein the firing conditions, except temperature remained unchanged. Therefore, it becomes clear that the firing temperature is preferably in the range of 1,000 - 1,400 °C.

### (Example 4)

Phosphors 21 and 22 were each prepared by firing Precursor 1, obtained in Example 1, for 2 and 11 hours under an atmosphere of 100% nitrogen at a temperature of 1,240 °C, wherein the firing conditions, except duration remained unchanged.

Phosphor 23 was prepared by firing obtained Phosphor 21 under an atmosphere of 100% nitrogen at a temperature of 1,240 °C for 3 hours. Further, Phosphor 24 was prepared by refiring obtained Phosphor 23 under the same conditions. On the other hand, Phosphor 25 was prepared by firing Phosphor 22 under an atmosphere of 100% nitrogen at a temperature of 1,240 °C for 3 hours. Further, Phosphor 26 was prepared by refiring obtained Phosphor 25 under the same conditions. The firing conditions for obtained Phosphors 21, 22, 23, 24, 25, and 26 are listed in following Table 7.

**Table 7**

| Phosphor No. | First Firing Step | | | Second Firing Step | | | Third Firing Step | | | Remarks |
|---|---|---|---|---|---|---|---|---|---|---|
| | Atmosphere | Temperature | Duration | Atmosphere | Temperature | Duration | Atmosphere | Temperature | Duration | |
| 3 | nitrogen 100% | 1240 °C | 5 hours | nitrogen 100% | 1240 °C | 3 hours | | | | Inv. |
| 4 | nitrogen 100% | 1240 °C | 5 hours | nitrogen 100% | 1240 °C | 3 hours | nitrogen 100% | 1240 °C | 3 hours | Inv. |
| 21 | nitrogen 100% | 1240 °C | 2 hours | | | | | | | Comp. |
| 22 | nitrogen 100% | 1240 °C | 11 hours | | | | | | | Comp. |
| 23 | nitrogen 100% | 1240 °C | 2 hours | nitrogen 100% | 1240 °C | 3 hours | | | | Inv. |
| 24 | nitrogen 100% | 1240 °C | 2 hours | nitrogen 100% | 1240 °C | 3 hours | nitrogen 100% | 1240 °C | 3 hours | Inv. |
| 25 | nitrogen 100% | 1240 °C | 11 hours | nitrogen 100% | 1240 °C | 3 hours | | | | Inv. |
| 26 | nitrogen 100% | 1240 °C | 11 hours | nitrogen 100% | 1240 °C | 3 hours | nitrogen 100% | 1240 °C | 3 hours | Inv. |

| | | | | | | | | | | |
|---|---|---|---|---|---|---|---|---|---|---|
| Inv.: Present Invention, Comp.: Comparative Example | | | | | | | | | | |

Each of obtained Phosphors 21, 22, 23, 24, 25, and 26 was pulverized, dispersed, classified, acid-treated, washed, and dried in the aforesaid order in the same manner as in Example 1. Relative emission intensity and sputtering retention rate of Phosphors 21, 22, 23, 24, 25, and 26, which had undergone every one of the above treatments, were measured in the same manner as in Example 1. The obtained numeric values are listed in following Table 8.

**Table 8**

| Phosphor No. | Relative Emission Intensity | Sputtering Retention Rate | Remarks |
|---|---|---|---|
| 3 | 110 | 95% | Present Invention |
| 4 | 110 | 98% | Present Invention |
| 21 | 90 | 70% | Comparative Example |
| 22 | 100 | 75% | Comparative Example |
| 23 | 100 | 93% | Present Invention |
| 24 | 105 | 95% | Present Invention |
| 25 | 105 | 95% | Present Invention |
| 26 | 105 | 95% | Present Invention |

As a result, when Phosphor 21, fired under an atmosphere of 100% nitrogen at a temperature of 1,240 °C for 2 hours,
was compared with Phosphor 23 prepared by firing Phosphor 21 at a temperature of 1,240 °C for 3 hours in the following second firing step, as well as Phosphor 24 prepared by firing Phosphor 21 at a temperature of 1,240 °C for 3 hours both in the following second and third firing steps, Phosphors 23 and 24 exhibited higher relative emission intensity and higher sputtering retention rate than Phosphor 21. Further, when Phosphor 22 fired under an atmosphere of 100% nitrogen at a temperature of 1,240 °C for 11 hours was compared with Phosphor 25 prepared by firing Phosphor 22 at a temperature of 1,240 °C for 3 hours in the following second firing step as well as Phosphor 26 prepared by firing Phosphor 22 at a temperature of 1,240 °C for 3 hours both in the following second and third firing steps, Phosphors 25 and 26 exhibited higher relative emission intensity and higher sputtering retention rate than Phosphor 22. These results indicated that Phosphors 21, 23, and 24 as well as 22, 25, and 26 exhibited lower relative emission intensity and low sputtering retention rate than Phosphors 1, 3, and 4 fired for 5 hours in a first firing step, wherein the firing conditions, except for duration remained unchanged. Therefore, it becomes clear that the firing duration in a first firing step is preferably in the range of 3 - 10 hours.

### (Example 5)

Further, Phosphors 27 and 28 were each prepared by firing Phosphor 1 obtained in Example 1 for 1 and 6 hours under an atmosphere of 100% nitrogen at a temperature of 1,240 °C in the following firing step, wherein the firing conditions except for firing duration remained unchanged.

Phosphor 29 was prepared by firing obtained Phosphor 27 under an atmosphere of 100% nitrogen at a temperature of 1,240 °C for 3 hours.

On the other hand, Phosphor 30 was prepared by firing Phosphor 28 under an atmosphere of 100% nitrogen at a temperature of 1,240 °C for 3 hours. The firing conditions for obtained Phosphors 27, 28, 29, and 30 are listed in following Table 9.

**Table 9**

| Phosphor No. | First Firing Step | | | Second Firing Step | | | Third Firing Step | | | Remarks |
|---|---|---|---|---|---|---|---|---|---|---|
| | Atmosphere | Temperature | Duration | Atmosphere | Temperature | Duration | Atmosphere | Temperature | Duration | |
| 3 | nitrogen 100% | 1240 °C | 5 hours | nitrogen 100% | 1240 °C | 3 hours | | | | Inv. |
| 4 | nitrogen 100% | 1240 °C | 5 hours | nitrogen 100% | 1240 °C | 3 hours | nitrogen 100% | 1240 °C | 3 hours | Inv. |
| 27 | nitrogen 100% | 1240 °C | 5 hours | nitrogen 100% | 1240 °C | 1 hours | | | | Inv. |
| 28 | nitrogen 100% | 1240 °C | 5 hours | nitrogen 100% | 1240 °C | 6 hours | | | | Inv. |
| 29 | nitrogen 100% | 1240 °C | 5 hours | nitrogen 100% | 1240 °C | 1 hours | nitrogen 100% | 1240 °C | 3 hours | Inv. |
| 30 | nitrogen | 1240°C | 5 hours | nitrogen 100% | 1240°C | 6 hours | nitrogen 100% | 1240°C | 3hours | Inv. |

| | | | | | | | | | | |
|---|---|---|---|---|---|---|---|---|---|---|
| Inv.: Present Invention | | | | | | | | | | |

Each of obtained Phosphors 27, 28, 29, and 30 was pulverized, dispersed, classified, acid-treated, washed, and dried in the aforesaid order in the same manner as in Example 1. Relative emission intensity and sputtering retention rate of Phosphors 27, 28, 29, and 30, which had undergone every one of the above treatments, were measured in the same manner as in Example 1. The obtained numeric values are listed in Table 10.

**Table 10**

| Phosphor No. | Relative Emission Intensity | Sputtering Retention Rate | Remarks |
|---|---|---|---|
| 3 | 110 | 95% | Present Invention |
| 4 | 110 | 98% | Present Invention |
| 27 | 105 | 95% | Present Invention |
| 28 | 105 | 95% | Present Invention |
| 29 | 105 | 95% | Present Invention |
| 30 | 105 | 95% | Present Invention |

As a result, Phosphor 1 was compared with Phosphor 27 fired at a temperature of 1,240 °C for one hour in the following second firing step as well as Phosphor 19 prepared by firing Phosphor 1 at a temperature of 1,240 °C for 1 hour in the following second firing step and then by firing the resultant material at a temperature of 1,240 °C for 3 hours in a third firing steps, Phosphors 27 and 29 each exhibited the same relative emission intensity and sputtering retention rate. Further, when Phosphor 1 was compared with Phosphor 28 fired at a temperature of 1,240 °C for 6 hours in the following second firing step as well as Phosphor 30 prepared by firing Phosphor 1 at a temperature of 1,240 °C for 6 hours in the following second and then firing the resultant material at a temperature of 1,240 °C for 3 hours in a third firing step, Phosphors 28 and 30 each exhibited the same relative emission intensity and sputtering retention rate. These results indicate that Phosphors 27 and 29 as well as Phosphors 28 and 30 exhibited lower relative emission intensity than Phosphor 3 fired for 3 hours, wherein the firing conditions except for duration remained unchanged, as well as Phosphor 4 fired for 3 hours both in a second and third firing steps, wherein the firing conditions except for duration remained unchanged. Therefore, it becomes clear that the firing duration in each of the firing steps starting with a second firing step is preferably in the range of 2 - 5 hours.

As described above, according to the production methods and the Phosphors in the preferred embodiments of the present invention, since the firing step is composed of a plurality of steps, wherein precursors are fired under an atmosphere of an inert gas, it is possible to efficiently burn up residual impurities and by-product salts in the phosphors via firing treatments conducted plural times under an inert gas atmosphere. According to the foregoing, it is possible to efficiently decrease defects in the phosphor hosts via sputtering or exposure to VUV, while high emission intensity in the phosphors and plasma display panel 101 is retained.

Further, since firing temperatures, in a plurality of firing steps, are in the range of 1,000 - 1,400 °C, it is possible to more efficiently burn up residual impurities and by-product salts in the phosphors via adjusting the firing temperatures in each of the firing steps, whereby the more preferable effects may be obtained.

Still further, since the firing duration in a first firing step is in the range of 3 - 10 hours, it is possible to more efficiently burn up residual impurities and by-product salts in the phosphors via adjusting the firing duration in the first step, whereby more preferable effects may be obtained.

Yet further, since the firing duration in each of the firing steps starting with a second firing step, it is possible to more efficiently burn up residual impurities and by-product salts in the phosphors via adjusting the firing duration in each of the firing steps starting with a second firing step, whereby more preferable effects may be obtained.

## Claims

1. A method of manufacturing a phosphor comprising the steps of:
forming a precursor of the phosphor in a liquid phase; and
firing the precursor to form the phosphor,
wherein
the step of firing the precursor comprises a plurality of firing steps of the precursor in an inert gas atmosphere.

2. The method of manufacturing a phosphor of claim 1, wherein a firing temperature in each of the plurality of firing steps of the precursor is 1000 to 1400 °C.

3. The method of manufacturing a phosphor of claim 1, wherein a firing duration of a first firing step is 3 to 10 hours.

4. The method of manufacturing a phosphor of claim 1, wherein a firing duration of each of a second firing step or the following step is 2 to 5 hours.

5. A phosphor manufactured by the method of claim 1.

6. A plasma display comprising a discharge cell manufactured by using the phosphor of claim 5.
